# EUROPEAN PATENT SPECIFICATION

(11) **EP 0 377 419 B1**
(45) Date of publication and mention of the grant of the patent: **22.12.1993**
(21) Application number: 89850002.0
(22) Date of filing: 05.01.1989
(51) Int. Cl.: B01D 46/52

(54) **Filter**
Filter
Filtre

(43) Date of publication of application: 11.07.1990
(73) Proprietor: CAMFIL AB, S-150 13 Trosa (SE)
(72) Inventor: Kjell, Enbom, S-610 70 Vaagnhärad (SE)
(74) Representative: Berglund, Erik Wilhelm

(56) References cited:
- DE-A- 2 718 217
- DE-A- 3 219 671
- DE-U- 8 617 256
- FR-A- 2 490 970
- US-A- 4 135 900

## Description

This invention is concerned with filters constituted of a paper like or other filter sheet material that is folded to a zick-zack shape, for instance so called absolute filters, that is filters where practically no inpurities pass the filter. To obtain the least flow resistence through the filter it is desired that the filter is zick-zack shaped with wedgelike cross-sections on each side of the filter. In this way the flow through the filter is smooth and continous with the same flow velocity all the way through and since the preassure over the filter surface is even the entire surface is utilized. To secure that the filter functions properly it is necessary that the wedgelike structure is kept open. This is for instance done by the inserting of wedgelike distance elements made of corrugated aluminium strips. The fabrication of these wedgelike strips is however rather expensive due to the tooling costs and of course also the aluminium costs. An other way of securing the wedge like shape is of course to hold the filter material in a surrounding fixture or frame. This is also costly and furthermore unsuited for large filters.

One way of producing a distance element in a filter is described in Fr-A-2 490 970. Here the distance elements are constituted by strings of glue intermittingly applied to the filter material . This type of filter however has the drawback that the wedges between the fold will not be triangular to their cross-section, but instead of continuous width, which in turn does not give an even flow and uniform load over the filter surface.

In view of the above it is the object of the invention to obtain a filter with a triangular wedge like cross-section in a simple manner that is easy to carry out and therefore also possible to fabricate at low costs.

The above object is according to the invention achieved by applying to the filter material before it is folded deposits of glue on both of the wedge sides at the wider end thereof and only on one side close to the inner end thereof. In other words glue is applied in an intermittent way. A glue is used since it will hold the filter together during fabrication and increase the strength of the filter when it is used or transported. The glue can be kept in an adhesive state until the folding has been done or it can of course also be disactivated inbetween and then be activated so that it gets tacky on the surface, all depending on remaining factors.

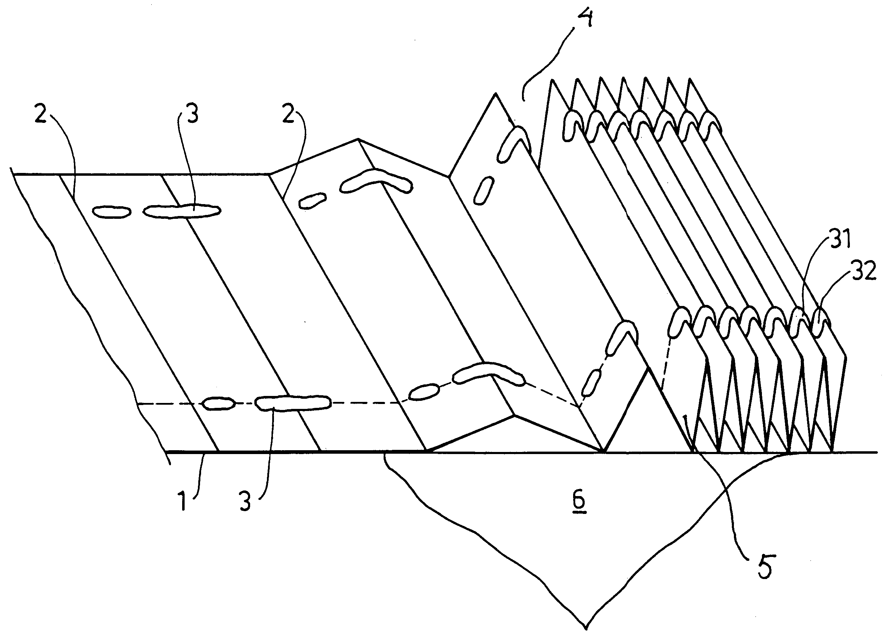

The invention is below to be described in a prefered embodiment shown in the drawing.

In the drawing a filter sheet material is designated by 1. When the filter is fabricated folding lines 2 are preformed in the material by compressing the sheet material along parallell lines. At the next station glue is administered to the upper and under side of the filter sheet material. As can be seen the glue is not administrated in one continuous line but in short broken lines 3. The administration of glue 3 is such that when the filter sheet material in a consecutive fabrication step is folded an even wedge like appearance is obtained. This wedge like appearance is obatined by allowing two opposite glue spots 31, 32 or glue lines to come in contact at the open edge 4 of the wedge whereas at the apex of 5 the wedge no glue is administrated and in the vicinity thereof glue is only applied to one of the two opposite surfaces. The glue is administrated in the same manner on the lower side of the filter material.

In the shown embodiment the filter sheet material is folded while the glue is till at least partially melted so that the glue can adhere to itself glueing the filter together. In this manner the distance between the folds and thus the area of the filter can be governed by the speed with which the folded filter is removed and the supply of filter sheet material. A fast transportation of the filter results in rather wide wedges whereas a slow transportation makes a more compact filter with a greater surface. It is also possible to allow the glue to harden before the folding and the glue can be remelted at the folding station or not. In fact it need not be glue that is used but also other materials can be deposited on the filter sheet material in order to give this wedge like appearance when the filter is folded.

In this embodiment the use of glue however is of importance since it is used to glue an additional air penetratable sheet material 6 to the under side of the filter. This material is forced up and against the bottom or the lower side of the filter. Since the glue lines pass over the outside of the downwards directed wedges no additional glue has to be administrated to fasten the penetratabel sheet material.

If additional strength is desired an additional air penetratable sheet material can be applied on the upper side of the filter in the same way but this has to be pressed down against the filter by an air cushion or something else.

At later not shown stages in the preparation of the filter it can be cut up in suitable sizes etc.

In the above description one manner of obtaining the wedgelike cross-section of the filter has been described. Of cours other paterns for the glue is also possible and of course the additionally applied sheet material can also be applied by a separate glueing station.

It should be noted that other patterns may also be used to obtain differntly sized distance elements.

Depending on the machinery available for applying glue or other materials it is of course also possible to apply the glue with a thickness corresponding to the angle of the wedge, for instance by means of nozzles of different sizes.

## Claims

1. Filter constituted by sheet material folded to a zick-zack configuration with a cross-section of opposed wedges, with distance elements between adjacent sides of the filter folds, the distance elements consisting of glue that is applied in intermittent strings to the sheet material so that at the open end of each fold two glue spots or glue strings one on each side of the fold are located opposite and against each other characterized in that the folds have a triangular wedge like cross-section and in the inner end of each fold or close thereto glue is applied only to one side of the fold.

2. Filter according to claim 1 or 2, **characterized in** that the distance element deposit is applied with appropriately uneven thickness.

## Patentansprüche

1. Filter, der durch Bahnmaterial gebildet ist, das zu einer Zick-Zack-Anordnung mit einem Querschnitt aus entgegengesetzten Keilen gefaltet ist, mit Abstandselementen zwischen benachbarten Seiten der Filterfalten, welche Abstandselemente aus Klebstoff bestehen, der in unterbrochenen Adern auf das Bahnmaterial so aufgebracht ist, daß am offenen Ende jeder Falte zwei Klebstofftropfen oder Klebstoffadern, einer bzw. eine an jeder Seite der Falte, einander entgegengesetzt und gegeneinander angeordnet sind, dadurch gekennzeichnet, daß die Falten einen dreieckigen keilartigen Querschnitt aufweisen und im inneren Ende jeder Falte oder nahe desselben Klebstoff nur an einer Seite der Falte aufgebracht ist.

2. Filter nach Anspruch 1, dadurch gekennzeichnet, daß die Abstandselements-Ablagerung mit angemessen ungleicher Dicke aufgebracht ist.

## Revendications

1. Filtre constitué par un matériau en feuille plié suivant une configuration en zigzag avec une section transversale de coins opposés, avec des éléments d'écartement entre des côtés adjacents des plis de filtre, les éléments d'écartement étant constitués de colle qui est appliquée suivant des bandes intermittantes sur le matériau de feuille de sorte qu'à l'extrémité ouverte de chaque pli, deux points de colle ou bandes de colle une sur chaque côté du pli sont localisées en face et l'une contre l'autre, caractérisé en ce que les plis ont une section transversale en forme de coin triangulaire, et dans l'extrémité intérieure de chaque pli ou près de celui-ci de la colle est appliquée seulement sur un côté du pli.

2. Filtre selon la revendication 1 ou 2, caractérisé en ce que le dépôt de l'élément d'écartement est appliqué en une épaisseur inégale appropriée.
